(19)

Europäisches
Patentamt
European
Patent Office
Office européen
des brevets

(11) **EP 2 101 096 A1**

(12) **EUROPEAN PATENT APPLICATION**
published in accordance with Art. 153(4) EPC

(43) Date of publication:
**16.09.2009 Bulletin 2009/38**

(51) Int Cl.:
***F16L 19/08*** *(2006.01)*

(21) Application number: **07845844.5**

(22) Date of filing: **07.12.2007**

(86) International application number:
**PCT/CN2007/003486**

(87) International publication number:
**WO 2008/071073 (19.06.2008 Gazette 2008/25)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **11.12.2006 CN 200610164350**

(71) Applicants:
• **Zhejiang China Valve Co., Ltd.
Wenzhou, Zhejiang 325024 (CN)**

• **Xu, Changxiang
Zhejiang 325024 (CN)**

(72) Inventor: **XU, Changxiang
Zhejiang 325024 (CN)**

(74) Representative: **Leszczynski, André
NONY & ASSOCIES
3, rue de Penthièvre
75008 Paris (FR)**

(54) **EXTRUDE PIPE CONNECTING PART WITH INTEGRATED SINGLE AND DOUBLE CLAMPING RING**

(57)    A tube fitting with either single or double ferrule swage design common in one system, in one ISO 8434-1 system, being made up of connecting bodies, swaging ferrules and driving nuts, and being a single ferrule design when using one swaging ferrule and being a double ferrule design when using a sealing ferrule and a holding ferrule as the swaging ferrule. The single ferrule tube fitting provides at first a sole smooth-swaged joint for sealing by a sealing cantilever of the ferrule head wedge, and then a depression-swaged joint for fastening by an inner edge of the ferrule head wedge, an operation stopping feel for installation by a ferrule tail wedge, and an isolation of the ferrule head from the tail overdriven motion by an automatic radial outward warp of the middle of the ferrule, resulting in being able both to deliver a definite installation-stopping feel and tolerate any over-
drive installation. The double ferrule tube fitting provides at first a sole smooth-swaged joint for sealing by a sealing cantilever of the head wedge of the sealing ferrule, and then a transition-swaged joint for sealing and fastening by an inner edge of the sealing ferrule head wedge, a depression-swaged joint for fastening by the holding ferrule and an operation stopping feel for installation by a ferrule-swaged depression, resulting in being able both to deliver a more definite installation stopping feel and more tolerate any overdrive installation. The sealing cantilever is in the pressurized medium and has a self-energized ability, and has a more shock and vibration resistance because the cantilever is at first suspended and then isolated by the double fastening joints.

EP 2 101 096 A1

## Description

## Technical Fields

The invention relates to a tube fitting for applications in both a fluid power system and a fluid conveying system, which is developed on the base of tube-connecting methods proposed in application of CN 02128376.1.

## Background of the Invention

The swaged connection of tubing is a connection of tubing for fluid systems realized by driving ferrules or sleeves between the tubing and its connecting components, and developed relative to the prior swaged connection of flared tubing and called a flareless-tube connection. Now there are two popular designs of tube fittings in the world. One is the single ferrule design specified in ISO 8434-1 and the other is the double ferrule design developed by Swagelok. The tube fittings specified in China National Standards of GB 3733-GB 3765 are of the ISO 8434-1 design originating from DIN standards.

The single ferrule design disclosed by German Kreidel in US 2139413 in 1932 is the prototype of the design in ISO 8434-1 and was called an Ermeto design in some patents including US 2414995 in 1940s. Ermeto is a firm name of a tube fitting manufacture in Germany. Ermeto declare in their catalog 4100-7-UK that the single ferrule design of ISO 8434-1 is to be obsoleted by their multiple ferrule design in US 5351998 in 1990, whereas the design in ISO 8434-1:2005 is still the same as the prototype of Ermeto design.

The double ferrule design disclosed by American Crawford in US 2484815 in 1947 is the prototype of the Swagelok design and has been kept and improved by Swagelok. Although Swagelok have been defending their design, their Williams, the modem renewer of Swagelok design, proposed a new single ferrule design in US 2004/0066040, US 20060049632 and US 2006/0012169 in 2002.

The ferrule-swaged connection of tubing, like the other leak proof connections, shall finish two connections of sealing and fastening; the fastening connection is to keep the sealing connection against the fluid pressure and the environmental force. The ferrule-swaged connection is mainly to finish the sealing and the fastening of ferrule to plain tubing because the sealing of ferrule to body is a sealing between two precision-machined surfaces which is more easily reached. The smoother the swaging of ferrule to tubing, the better the tight connection; especially the smoother and the shallower the swaged joint surface, the more consistent in a circular direction the swaged joint surface, and of course the better the tightness of the repeated reassemblies. The more depressed and the deeper the swaging of ferrule to tubing, the better the fastening connection, but the more inconsistent in a circular direction the swaged joint surface, and of course the worse the tightness of the repeated re-assemblies. Therefore, there shall be two kinds of separately and differently swaged joints or swaging motions for ferrule-swaged connections; one is the swage-smoothed joint or the smooth-swaging motion, and the other is the swage-depressed joint or the depression-swaging motion. The practice has proved that a swaged joint surface resulting from a rotated ferrule is of a lustreless surface with scratching or tearing, and a swaged joint surface resulting from unrotated ferrule is of a lustreed surface without scratching or tearing; i.e. the ideal smooth-swaging motion for the ferrule-swaged connection of tubing shall be an axial movement of ferrules without any rotation; the swage-smoothed joint without ferrule rotation can tolerate a great change of ellipticity, smoothness and installed coaxiality of a tubing surface. Because the smooth swaging and the depression-swaging motions are produced by the same ferrule under a drive of the same nut, they shall be separate and in succession; if their happening spaces are not separate, they cannot result in two different swaged joints; if their happening times are not in succession, the swage-depressed joint finishing in advance will end the smooth-swaging motion in advance and result in not finishing the sealing connection, and the swage-depressed joint finishing delayedly will delay ending the smooth-swaging motion and result in damaging a finished sealing joint. For the resistance of the swaged connection to shock and vibration, the swage-smoothed area shall be shielded fully by the swage depressed area. The above-mentioned is the principles for designing the ferrule-swaged connection of tubing, which are refined by the inventor from hundreds of patents for 100 years and also the designing fundamental of the invention and the guiding ideology of the inventor when he performed the revision of China National Standards of GB 3733-GB 3765.

However, no patent has related to the concept of swage-smoothed joints and swage-depressed joints for the tube-swaging connection design and has not emphasized blindly the biting or cutting of the tubing for the tube-swaging connection since 1899, such as from Kurtz's US 650330 in 1899 to Kreidel's single ferrule design of US 2139413 in 1932 and to Ermeto's multiple ferrule design of US 5351998 in 1990, and from Crawford's Swagelok double ferrule design in 1947 to Williams's single ferrule design in 2002.

Our practice has proved that the sealing is far easier to be realized than the fastening for tube-swaging connections because the plain end tube connected shall withstand a pressure test of 4 times the rating. To blindly emphasize the swaging of tubing results in decreasing the tightness of the tube-swaging connection, and so later there have to be patents DE 4041677, DE 4103266, DE 4426445, US 6073976 etc. which use attached non-metal gaskets to compensate for the tight loss of single-ferrule-swaged joints. Actually, the swaged joint with attached non-metal gaskets is away from the ferrule-swaged joint.

So far almost all the patents about the swaged connection, whether it is a single or double ferrule design, have focused its installation reliability or have tried to solve the problems that the fastening action shall be after the sealing action and the wrenching operation shall have a stop feel during installation. Some patents of double ferrule designs, such as US 3075793, US 3103373, US 5882050, US 6131963 and US 6629708, can provide a limited operation-stopping feel and a sealing before fastening assurance for installation, but can not yet tolerate over-tightening installation and so have to assure the installation reliability by strictly restricting the tightening turn numbers from the finger-tight position. Some patents of single ferrule designs, such as DE 4426445, US 6073976 and US 5351998, have a operating limit for installation and obviously can not cope with the diameter variation of tubing as to have to attach a non-metal gasket to compensate for the lack of tightness resulting from over-tightening when tubing is big and from under-tightening when tubing is small, and result in having no swage connection advantage.

To a certain extent, the bigger the installation torque, the more obtuse the person's feel of torque variation; the installer can not feel any torque variation when the installation torque is big up to some extent. It is on the base of substantially lowering the installation torque that it can be considered to provide an operation-stopping feel for installation. As a matter of fact, so far the installation torque of all the present tube swage connection, whether it is a single ferrule or double ferrule design, is too big, especially the installation torque of the Swagelok double ferrule design is too big to use a slightly hard ferrule, such as the case-hardened ferrule, required for high pressure service.

At present, the Ermeto single ferrule fitting and the Swagelok double ferrule fitting are two incompatible systems; they have their own set of swaging ferrules, driving nuts and connecting bodies which can not replace each other, which does not very benefit their manufacture and use in one workshop and seriously restricts their technical development.

Besides, the driving male and female threads of the prior art, with a similar strength, are against the fastening standard and dangerous.

**Disclosure of the Invention**

The first object of the invention is to provide according to the new designing principles a tube swage connection design with two coordinate tube-swaging motions which are separated and in succession, not interfered with and different from each other; using the smooth-swaging motion realizes the sealing connection and using the depression-swaging motion realizes the fastening connection.

The second object of the invention is to provide according to the new designing principles a tube swage connection design which can both have a definite installation stop feel and tolerate any overdriven installation.

The third object of the invention is to provide according to the new designing principles a tube swage connection design which is compatible for single and double ferrule designs or whose single ferrule and whose double ferrule set can be interchangeably assembled in the same system.

Reaching the three objects will increase the reliability and the extensive use of the tube swage connection, which is the general object of the invention.

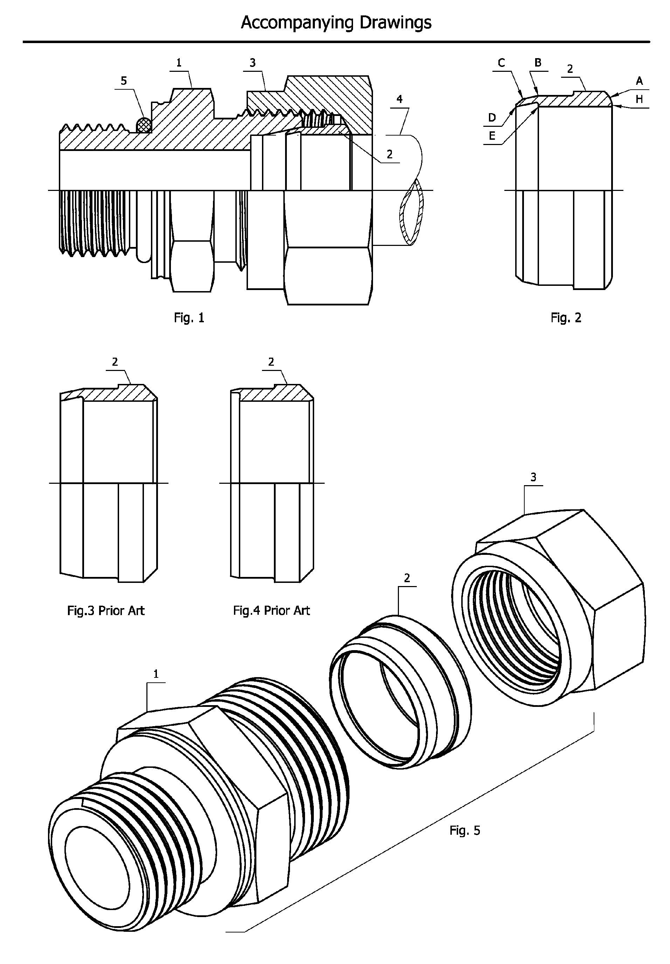

The first technical means to reach the three objects is a single ferrule tube fitting, as shown in Fig.1 and Fig.5, made up of a connecting body (1), a swaging ferrule (2) and a driving nut (3); the connecting body, on its outside, having a male thread engaged with the driving nut, and on its inside, in turn having a through hole, a stepped hole and a tapered mouth; the through hole having a diameter about equal to the inside diameter of the tubing (4), the stepped hole having a diameter slightly bigger than the outside diameter of the tubing, the tapered mouth being used to accommodate the swaging ferrule, the tubing through the driving nut and the swaging ferrule being inserted in the stepped hole against or not against its bottom, and the driving nut, by its thread engagement with the connecting body, driving the swaging ferrule between the connecting body and the tubing to finish the sealing and the fastening of the swaging ferrule to the tubing and the connecting body; wherein the said swaging ferrule (as shown in Fig.2) is a ferrule whose partial head exterior is steeper than the head exterior of the A type ferrule of DIN 3861:2002 (as shown in Fig.3), and whose being driven tail exterior is changed into an arc exterior from the conical exterior of DIN 3861:2002; integrally describing, the inside of the said swaging ferrule is made up of a conical frustum interior and a cylindrical interior, using the top edge of the conical frustum as the ferrule head edge of the said swaging ferrule, using the intersected circle of the conical frustum and the cylinder as the ferrule inner edge of the said swaging ferrule, and making the ferrule head edge and the ferrule inner edge have a similar diameter; the outside of the said swaging ferrule, from its head to its tail, is in turn made up of a conical exterior with a bigger taper than the said tapered mouth, a conical exterior with the same taper as the said tapered mouth, two stepped cylindrical exteriors parallel with the cylindrical interior, a being driven tail arc exterior and a end flat free from being driven, the chord corresponding to the being driven arc being parallel to the driving conical interior of the said driving nut; the said driving nut is a nut whose driving conical angle is changed into more than 90° from 90° of ISO 8434-1; integrally describing, the said driving nut has a wrenching hexagonal exterior, and in turn a driving cylindrical female thread, a driving conical interior and a cylindrical interior; the said swaging ferrule can be made with the same material as the tubing, but the said driving nut should have a hardness slightly harder than the said swaging ferrule.

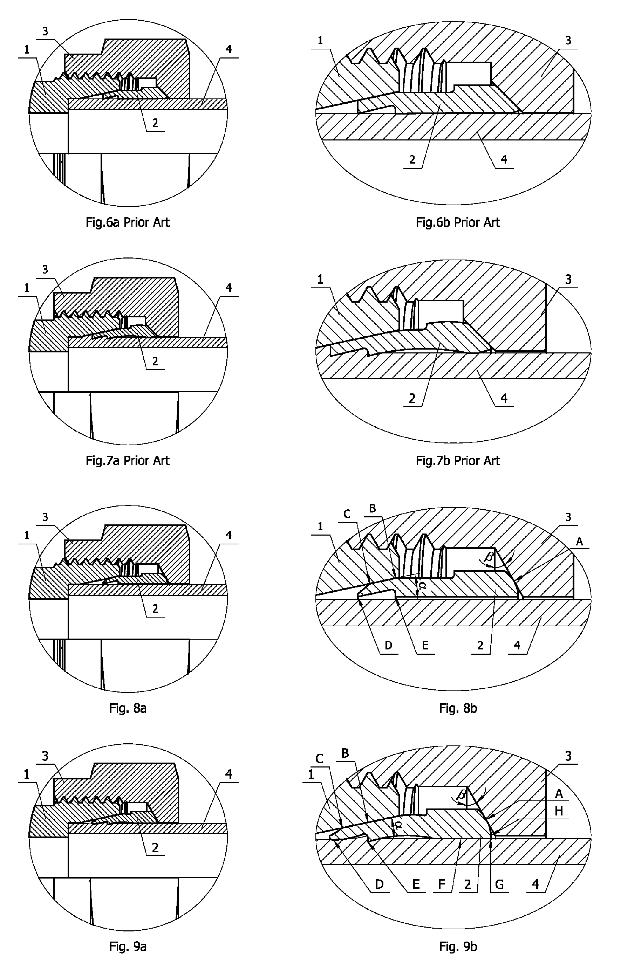

What is shown in Fig.3 is the present DIN-specified double edge ferrule used in ISO 8434-1, and what is shown in Fig.4 is the early single edge ferrule used in ISO 8434-1. As shown in Figs.6 and 7, the two edges of Fig.3 have the same distance away from the tubing when finger-tightened, and the ferrule head edge and the ferrule inner edge will in turn swage the tubing because the ferrule head has a thinner wall and a bigger swage force than the ferrule tail when wrench-tightened. In Fig.4, the ferrule head edge is farther away from the tubing than the ferrule inner edge, and it is the ferrule inner edge that is swaged into the tubing when driven. Because it is almost done by a circle for the ferrule head of Fig.4 to swage the tapered mouth of the connecting body, and by a conical exterior, for the ferrule head of Fig.3, it is easier for the ferrule head of Fig.4 both to realize its initial sealing and to damage its finished sealing of the tapered mouth of the connecting body than for the ferrule head of Fig.3.

The prior ferrule head exterior shown in Fig.3, after cut to partially become steeper, is changed into the ferrule head exterior of the invention shown in Fig.2. The ferrule head with its partial exterior steeper than the prior ferrule head or with its partial overhang working, as shown in Figs.8 and 9, does its swaging of the tapered mouth wall of the connecting body mainly by its two circles B and

C, and does its swaging of the tubing, by its two edge circles D and E. Because of especially making the inner edge circle E and the outer intersection circle B of the ferrule head and the ferrule middle be in the same plane, the circle B can be called the cutter back circle of the edge circle E. Because the circle C is the fulcrum of the overhung ferrule head or sealing cantilever, the circle C can be called the fulcrum circle of the sealing cantilever. As the driving force increases, the contact between the ferrule and the body will gradually develop from a line contact at circles B and C to a surface contact, and the bigger the driving force, the bigger the contact area gets. But no matter how big the contact area gets, the stress for the ferrule to compress the body is always bigger at the circular line B (as a cutter back) and the circular line C (as the fulcrum of a sealing cantilever) than in the surface contact, which is so that a line contact is always followed by a surface contact and that a surface contact always contains a line contact. Therefore, the partially overhung ferrule head, a sealing cantilever of the invention, can always provides both a sealing line contact and a loading surface contact for the connection of the ferrule and the body so that the tapered mouth is never swaged to damage and always maintain a sealing condition, i.e. the sealing cantilever is a full idealized body-sealing structure of the tube swage connection with a line contact for sealing and with a surface contact for loading.

As the ferrule head shrinks, the ferrule head edge D of the invention, similar to the ferrule head edge of the prior art shown in Fig.3, also swages tubing before the ferrule inner edge E does. But because the swaging of the ferrule head edge D on tubing is done by a cantilever D-C, the ferrule head edge D of the invention can only be swaged on the tubing but not into the tubing provided the cantilever has a suitable length and rigidity; the cantilever is the smooth-swaging structure especially provided by the invention for sealing. The sealing cantilever, being thin and elastic, can not swage its head edge into the tubing, but can eliminate the surface irregularities of swaged areas and cope with a big variation of tubing in ellipticity or roundness. The sealing cantilever, being in the pressurized medium, has a self-energized ability that the higher the medium pressure, the tighter the sealing. It is because the sealing cantilever has a self-energized ability and is thin and elastic to be able to provide a smooth-swaged joint that the sealing cantilever can cope with a big orientation variation in reassemblies. Therefore, the sealing cantilever is a fully idealized tube-sealing structure of the tube swage connection that does not need any attached non-metal gasket.

What Fig.8 shows is the finger-tightened condition, and Fig.9, the wrench-tightened condition. If finishing installation totally needs for wrench to tighten for N turns from finger-tightened position, the ferrule head edge D shall finish its sealing of tubing when wrench tightens for about N/2 turns, which can be checked by pressure testing; if not so when wrench tightens for N/2 turns, the sealing strength of the cantilever should be increased by either increasing the wall thickness at the ferrule head edge or shortening the cantilever, and if there is a visible swaged depression on the tubing after wrench tightens for about N turns, the sealing strength of the cantilever should be decreased by either decreasing the wall thickness at the ferrule head edge or lengthening the cantilever.

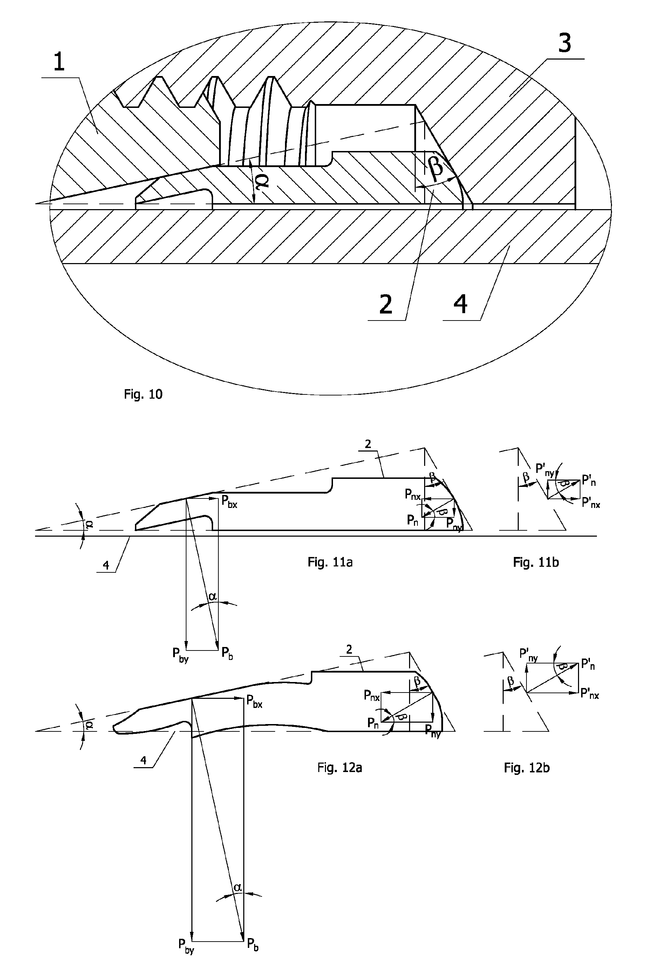

The swaging ferrule under drive, as shown in Figs.10~12, is actually equivalent to two interconnected wedges, the ferrule head wedge and the ferrule tail wedge being interconnected together. The ferrule head wedge, with a wedge angle $\alpha$, wedges the connecting body and the tubing under a drive from the driving nut, and the ferrule tail wedge, with a wedge angle $\beta$, wedges the ferrule and the driving nut under a drive from the resistance to ferrule tail shrink. In Figs.10~12, $P_b$ is the force reacting from the connecting body to the ferrule, and $P_n$, the ferrule-driving force from the driving nut. According to the principle that the acting force is equal to its reacting force, there are the following equations:

$$P_{bx}=P_{nx}=P'_{nx}=P_n\cos\beta$$

$$P_{ny}=P'_{ny}$$

Because the ratio of two normal compressive forces on the ferrule head and the ferrule tail is $(P_b/P_n)=(P_{nx}/\sin\alpha)/(P_{nx}/\cos\beta)=\cos\beta/\sin\alpha$, the angle $\beta$ shall be smaller, if the angle $\alpha$ and the friction coefficient is fixed, in order to ensure both that the ferrule head has a bigger normal compressive force or a bigger friction resistance to its turning and that the driving nut has a smaller normal compressive force on its driving surface or a smaller turning friction resistance of the nut to the ferrule tail, or to ensure that the ferrule can not be turned as driven, or to ensure that smooth-swaging motion of the sealing cantilever is only an axial movement without any turn. That is to say, increasing the driving conical angle of the driving nut of ISO 8434-1 can decrease the angle $\beta$, increase the turning resistance of the ferrule head to the body and decrease the turning resistance of the nut to the ferrule tail, and finally ensure that the nut can not bring the ferrule into turning.

Because the ratio of two radial compressive forces on the ferrule head and the ferrule tail is $(P_{by}/P_{ny})=(P_{nx}/tg\alpha)/(P_{nx}tg\beta)=1/tg\alpha tg\beta$, the angle $\beta$ shall be smaller, if the angle $\alpha$ is fixed, in order to ensure both that the ferrule head has a bigger radial compressive force $P_{by}$ and that the ferrule tail has a smaller radial compressive force $P_{ny}$, or to ensure that the ferrule is swaged at first for sealing and then for fastening during its being driven, or to ensure that the ferrule head shrinks prior to the ferrule tail. That is to say, if the driving conical angle (90°) of the driving nut of ISO 8434-1 is not changed, the angle $\beta$ is 45° and $tg\beta=1$ so as not to benefit the ferrule's being swaged at first for sealing and then for fastening as driven.

Actually, increasing the driving conical angle of the driving nut or decreasing the angle $\beta$ is equivalent to increasing the axial driving component and decreasing the radial driving component of the driving nut to make use of the axial component amplifying ability of the ferrule head wedge to further enlarge the ratio of two compressive forces on the ferrule head and the ferrule tail, which both ensures that the ferrule shrinks in turn from its head to its tail or that the ferrule is swaged at first for sealing and then for fastening, and ensures that the turning friction resistance of the ferrule head relative to the body is far bigger than of the nut relative to the ferrule tail or that the driven ferrule can not be turn.

The turning friction resistance of the nut relative to the ferrule tail is $F=fP'_n=fP'_{ny}/\sin\beta$, where $P'_n$ is the normal compressive force reacting from the ferrule tail to the driving surface of the nut, and f, the friction coefficient between the driving surface and the driven surface. Therefore, in order to make the driving nut has an abrupt strong resistance F to its turning or to deliver an installation feel at the time when the ferrule tail grips the tubing, if the friction coefficient f is fixed,

a the angle $\beta$ shall be smaller, or the driving conical angle of the driving nut shall be bigger, to increase the ability of the ferrule tail wedge amplifying the tube-gripping force of the ferrule tail, and

b the abruptness and magnitude of the tube-gripping force of the ferrule tail or the abruptness and magnitude of a resistance $P'_{ny}$ of tubing to the shrink of the ferrule tail on the tubing or the abruptness and magnitude of the effort of the ferrule tail wedge shall be increased.

If the driving conical angle of the driving nut of ISO 8434-1 is changed, such as, from 90° into 120°, the angle $\beta$ will be changed from 45° into 30° and the coefficient $(1/\sin\beta)$ of the ferrule wedge amplifying the tube-gripping force of the ferrule tail will be changed from 1.41 into 2. If the ferrule tail can start gripping the tubing for a moment with its whole cylindrical interior parallel to the tubing surface, the ferrule tail will have a bigger tube-gripping area and a smaller tube-gripping stress and seem to have a stronger and more abrupt resistance from the tubing when the ferrule tail grips the tubing. If the ferrule-driving design of the prior art is not improved, the ferrule middle will warp outwards and the ferrule tail will rotate inwards to start gripping the tubing with its port edge line and only to have a gradually growing tube-gripping force not delivering any installation stopping feel.

The means for the invention to relieve the tube-gripping action starting from a line contact is firstly to make the ferrule tail port end be free of being driven to eliminate the compressive stress near the port edge, especially eliminate the radial compressive stress near the port edge, and secondly to prevent the ferrule tail from deformation following the radial outward warp of the ferrule middle by applying a concentrated ferrule-driving force to the ferrule tail at the position radially away from the ferrule tail port. As shown in Figs.8 and 9, the ferrule tail has a circular flat H at the end port which can not be reached by the driving surface of the nut, and receives its being driven by an arc which concentrates the driving force to its top A in the longitudinal section. When driven, the ferrule tail not only has no radial compressive component to swage the tubing at its port edge G but also has a rotating moment produced by the force concentrated at point A and makes the port edge G have a trend away from the tubing to ensure that the ferrule tail starts gripping the tubing with a surface F but not with the circular line G. The smaller the ferrule tail wedge angle $\beta$, the bigger the axial ferrule-driving component, the bigger the moment preventing the radial outward warp of the ferrule middle and the bigger the trend making the ferrule tail start gripping the tubing with a bigger surface F. The bigger the tube-gripping area, the smaller the tube-gripping stress, and it is not easier to cause the tubing to be compressed, which means that the bigger the resistance of the ferrule tail to its shrinking or the bigger the resistance received by the ferrule tail. The abrupt shrinking resistance received by the ferrule tail for a moment, after amplified a few times by the ferrule tail wedge, will steeply become a great resistance to the turning of nut, which is the installation stopping feel which has been sought but can not yet be solved since the single ferrule tube fitting was invented in 1932.

As a matter of fact, after helping the ferrule tail wedge to deliver an installation stopping feel, the ferrule tail arc, under a forced overdrive, not only cannot as before prevent the ferrule tail warp following the radial outward warp of the ferrule middle but also can, by the ferrule tail warp, help isolating the ferrule head from the tail-overdriven motion. Besides, the ferrule tail arc not only can help decreasing the friction coefficient between the driving and the driven surfaces and lowering the installation torque to highlight the nut-turning resistance from the tubing at the time when ferrule tail grips the tubing, but hereafter also can help the contact between the driving and the driven surfaces to develop from a line contact to a surface contact to avoid a deep gripped joint between them caused by a concentrated stress.

It can be seen from the above-mentioned, on the premise of not changing the basic design system or the ferrule head wedge angle $\alpha$ of ISO 8434-1, that it can thoroughly improve the connecting properties of the tube swage connection only to increase the driving conical angle of the driving nut of ISO 8434-1 or only to decrease the ferrule tail wedge angle $\beta$ of ISO 8434-1.

As shown in Fig.11b, the normal compressive force $P'_n$ from the ferrule tail to its driving nut, which produces a nut-turning resistance, is composed of the axial advancing resistance $P'_{nx}$ of the ferrule head and the radial resistance $P'_{ny}$ of the ferrule tail to its shrink. As shown in Fig. 12b, only when the two components $P'_{nx}$ and $P'_{ny}$ increase at the same time, will the nut-turning resistance increase. Actually, it is imaginable that only the ferrule head will be advanced along the axis and the ferrule tail will never be compressed along the radius if the ferrule head has a smaller advancing resistance, and that only the ferrule tail will be compressed along the radius and the ferrule head will never advance along the axis if the ferrule tail has a smaller shrinking resistance; i.e. the axial advancing resistance $P'_{nx}$ of the ferrule head and the radial resistance $P'_{ny}$ of the ferrule tail to its shrink can never separately increase, and the nut-turning resistance can never increase separately following either component increase. As shown in Fig.8b, because the ferrule inner edge circle E and its back circle B are in the same plane, the cylindrical exterior close to the back circle B will outwards warp or expand relative to and following the shrink of the conical exterior close to the back circle B as the ferrule head shrinks to the time when its inner edge circle E swages the tubing. As shown in Fig. 9b, only as the cylindrical exterior of the cutter back radially expands or warps outwards, will the ferrule inner edge E have a cutting back angle; only after the ferrule inner edge E has a cutting back angle, it can cut well into the tubing; i.e. it will form a cutting back angle for the ferrule inner edge E and benefit its cutting into the tubing that the cylindrical exterior of the cutter back radially expands or warps outwards. As the warp develops continuously, the contact area between the ferrule and the body will increase continuously and their contact stress will be suppressed by their increasing contact area so that the ferrule head can withstand a bigger over-swaging force and does not shrink, which forms a compensation or a restriction of the ferrule inner edge E sharpening by its enlarging back angle to make the ferrule inner edge E be impossible to cut further into the tubing. That is to say, as the ferrule is driven, the ferrule inner edge E can only be swaged fully into the tubing, and the moment that the ferrule inner edge E is swaged fully into the tubing or finishes its fastening task, any overdriving or over-swaging of the ferrule can not further drive the ferrule head forward and can only drive the ferrule middle to outward warp. The outward warping of the ferrule middle close to the ferrule tail is a sign of the overdriven ferrule, but the outward warp shown in Fig.9b is only a small warp of the cylindrical exterior of the cutter back in the body and not the warp under an overdrive. Because the swaging ferrule of the invention not only has two cylindrical exteriors with the same diameter as each of ISO 8434-1 or with its ferrule tail diameter bigger than its a ferrule middle diameter but also has an over 8 times as big radial compressive force at the ferrule head as at the ferrule tail, the moment that the ferrule tail grips the tubing by surface F and can not shrink is surely the moment that the ferrule inner edge E has fully been swaged into the tubing, and at the moment the axial advancing resistance of the ferrule head can absolutely increase following any further increase of the radial shrinking resistance of the ferrule tail and it is absolutely the finish of wrenching operation for installation. The practice has proved that the moment the wrenching force abruptly increases is close to the moment not to be able to wrench further by a normal spanner and a normal wrenching force, and should be the time to end the installation operation; the installation stopping feel is very definite. The practice has still proved that a forced overdrive can not at all drive the ferrule head into the tapered wall of the body but only force the ferrule tail to slide on the tubing to make the ferrule middle warp and be swaged on the end of the tapered mouth of the body, and that all the swaged joints after withstanding a forced overdrive have no damaging or no scratching and no tearing and can pass a pressure test after reassemblies.

Another important cause that the single ferrule design of the invention can withstand any forced overdrive is because the driving nut has a hardened driving surface or a higher strength, and the swaging ferrule has a soft driven surface or a low strength, so as to effectively avoid the tight gripped joint between the driving and the driven surfaces caused by an overdrive and thoroughly eliminate the turning of the swaging ferrule caused by the tight gripped joint and the seal damage caused by the turning. The connecting body specified in ISO 8434-1 is made of annealed mild steel equivalent to Chinese Q235 steel; if using steel with its strength higher than Q235, the pressure rating shall be decreased according to the standard. That is to say, the driving nut hardened with the being hardened of its driving surface will make the tube swage connection benefit by the threaded engagement and become safer, because the threaded engagement will fail, if it fails, at first due to its weaker male threads whose failure is easier to be found to be helpful to removing the hidden peril of the accident in advance according to relative fastener standards.

From the above-mentioned, it can be seen that the swaging ferrule of the invention, as driven, swages the tubing at first by its ferrule head edge D to perform the primary sealing connection and then by its ferrule inner edge E to perform the secondary sealing connection and the primary fastening connection, and at last grips the tubing by its ferrule tail to perform the retaining and the isolating of the finished sealing and fastening connections and to deliver an operation stopping feel for installation at the same time.

Because it is by a sealing cantilever with an adequate strength that the ferrule head edge D swages the tubing, the edge D can only have a tube-swaging ability for smoothing but not for depressing or can only provide a smoothing swage or a smooth-swaged joint for connection no matter how the ferrule is driven. Because the back of the ferrule inner edge E is against the tapered mouth wall of the connecting body, the edge E can only be swaged into the tubing to provide a depressing swage or a depression-swaged joint for connection. The depression-swaged joint between the edge E and the tubing can play a sealing role in connection, but is designed neither as the principal seal of connection nor as the sealing support in reassemblies, i.e. it does not matter whether the depression-swaged joint plays a sealing role in connection or not; however, the smooth-swaged joint between the edge D and the tubing is so smooth and so shallow to be able to have a sealing ability in any reassembly whether the reassembly can be in the initial position or not. The sealing cantilever is in the pressurized medium and has a self-energized ability, and so the tightness of the connection can increase with the pressure increase. On the one hand, the sealing joints themselves are so suspended as to have a shock and vibration resistance; on the other hand, an external shock or vibration is difficult to pass through the double fastening shields provided by the surface F and the edge E; and so the connection has an especial shock and vibration resistance. The fulcrums of the sealing cantilever on the connecting body are two circular lines on a contact surface, and so the sealing between the ferrule and the body, ensured by a line contact, and the loading between the ferrule and the body, applied to an enough surface contact, are very perfect. Therefore, the sealing cantilever of the invention not only provides a remarkable smooth-swaged seal but also provides and optimizes the other connecting performances of the tube swage connection.

Because the swaging ferrule of the invention is thinner at the ferrule head than at the ferrule tail, and has a bigger compressive force at the ferrule head than at the ferrule tail, the ferrule will gradually shrink in turn from the ferrule head to the ferrule tail to make at first the ferrule head edge D swage the tubing for sealing and then the ferrule inner edge E swage the tubing for fastening as the ferrule is driven. As the ferrule inner edge E does its fastening swage, at first the cutter back circle B will induce the ferrule middle to warp outwards for the first time both to swage the ferrule inner edge E fully into the tubing (to ensure the connecting quality) and to increase the contact area between the ferrule and the body (to get ready to receive an overdrive), and then the ferrule tail arc will induce the ferrule middle to warp outwards for the second time to make the ferrule head be fully free of an overdrive. Therefore, in addition to the sealing, which is provided by the sealing cantilever and can tolerate any overdrive, it is very sure that any overdrive can not change the finished sealing and fastening connection of the invention, and it can be seen that the single ferrule swaged connection of the invention is completed by two coordinated smooth-swaging and depression-swaging motions with each separate and in succession.

On the one hand, it is increasing the driving conical angle of the nut or decreasing the ferrule tail wedge angle β, increasing the axial driving component of the nut and finally making use of the ferrule head wedge to greatly lower the installation torque that effectively increase the sensitiveness for an installer to feel a wrenching resistance outputted out of the ferrule tail wedge. On the other hand, it is using an arc ferrule tail and a hardened driving surface of the nut that effectively decreases the torque caused by the friction or by the tight gripped joint between the driving surface and the driven surface in assemblies. Therefore, it can be seen that the single ferrule swaged connection of the invention has a very definite installation stopping feel delivered by a ferrule tail wedge amplifying the tube-gripping resistance of the ferrule tail on the base of effectively lowering the installation torque.

Relieving the tight gripped joint between the driving and the driven surfaces for the last drive is equivalent to relieving the possibility that it scratches or tears the sealing surface for the nut to bring the ferrule into turning under a heavy compression, and therefore, in addition to relieving the last axial movement of the ferrule head as mentioned above, the single ferrule swaged connection of the invention can tolerate any overdrive.

Therefore, the single ferrule tube fitting of the invention completely reaches its inventing object as mentioned above.

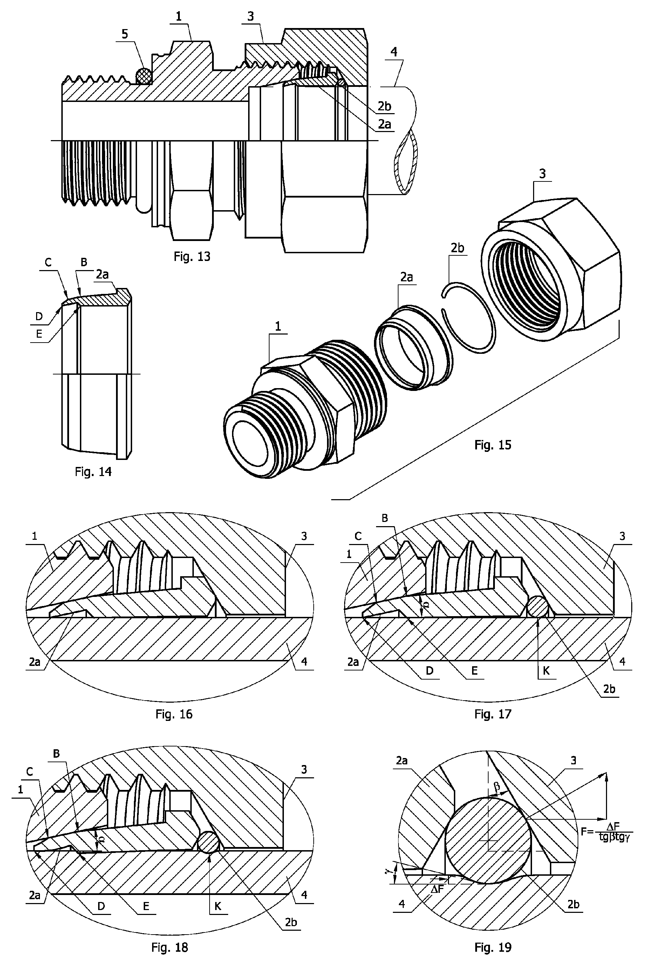

The second technical means to reach the three objects is a double ferrule tube fitting, as shown in Fig. 13 and Fig.15, made up of a connecting body (1), a sealing ferrule (2a), a holding ferrule (2b) and a driving nut (3); the connecting body, on its outside, having a male thread engaged with the driving nut, and on its inside, in turn having a through hole, a stepped hole and a tapered mouth; the through hole having a diameter about equal to the inside diameter of the tubing (4), the stepped hole having a diameter slightly bigger than the outside diameter of the tubing, the tapered mouth being used to accommodate the sealing ferrule, the tubing through the driving nut, the holding ferrule and the sealing ferrule being inserted in the stepped hole against or not against its bottom, and the driving nut, by its thread engagement with the connecting body, driving the sealing ferrule and the holding ferrule between the connecting body and the tubing to finish the sealing and the fastening of the double swaging ferrule set to the tubing and the connecting body; wherein the said sealing ferrule (as shown in Fig.14) is a ferrule whose partial head exterior is steeper than the head exterior of the A type ferrule of DIN 3861:2002 (as shown in Fig.3), whose middle exterior is changed into a conical exterior from the cylindrical exterior of DIN 3861: 2002, whose being driven tail exterior is changed into a more than 90° conical exterior from the 90° conical exterior of DIN 3861:2002, and whose tail adds an being driven tapered mouth; integrally describing, the inside of the said sealing ferrule is in turn made up of two conical frustum interiors with one common base, a cylindrical interior and a tapered mouth, using the top edge of the front conical frustum as the ferrule head edge of the said sealing ferrule, using the top edge of the back conical frustum as the ferrule inner edge of the said swaging ferrule, using the tapered mouth to receive the drive of the said holding ferrule and making the ferrule head edge and the ferrule inner edge have a similar diameter; the outside of the said sealing ferrule, from its head to its tail, is in turn made up of a conical exterior with a bigger taper than the said tapered mouth, a conical exterior with the same taper as the said tapered mouth, a conical exterior with a smaller taper than the said tapered mouth, a stepped cylindrical exteriors parallel with the cylindrical interior, and an auxiliary conical exterior which can receive a drive of the said driving nut; the said holding ferrule is a turn of split steel wires with round section, being hardened by cold-working and having a higher hardness than the tubing; the said driving nut is a nut whose driving conical angle is changed into more than 90° from 90° of ISO 8434-1; integrally describing, the said driving nut has a wrenching hexagonal exterior, and in turn a driving cylindrical female thread, a driving conical interior and a cylindrical interior; the said sealing ferrule can be made with the same material as the tubing, but the said driving nut shall not have a hardness softer than the said holding ferrule.

The swaging ferrule (2) for the single ferrule design of the invention and the swaging ferrule set made up of the sealing ferrule (2a) and the holding ferrule (2b) for the double ferrule design of the invention can displace each other to change a double ferrule tube fitting into a single ferrule tube fitting or to change a double ferrule swaged connection into a single ferrule swaged connection, and vice versa. That is to say, the single ferrule tube fitting and the double ferrule tube fitting of the invention have the similar designs and functions except their swaging ferrule. Therefore, any component or part indicated with a similar part number in the drawings of the invention has a similar design and function.

The sealing ferrule for the double ferrule design of the invention has a ferrule inner edge E with a bigger included angle (see Fig.17) than the swaging ferrule for the single ferrule design of the invention (has a ferrule inner edge E with a included angle about 90°, as shown in Fig.8b); except the angle, the other designs and the functions for the two ferrule heads are all the same. The bigger included angle will result in a V-groove on the tubing; the V-groove will wedge up the sealing ferrule during disassemblies and benefit the dismantling of the sealing ferrule off the tubing.

The swaging ferrule for the single ferrule design of the invention needs its middle to radially outwards warp to provide at first a cutting back angle for the ferrule inner edge E and then an overdrive shield for the ferrule head, whereas the sealing ferrule for the double ferrule design of the invention does not need its middle to radially outwards warp to provide either a cutting back angle for the ferrule inner edge E or an overdrive shield for the ferrule head. Therefore, the sealing ferrule for the double ferrule design of the invention may have a conical exterior middle, which can make the sealing ferrule have a higher rigidity than the swaging ferrule of the single ferrule design with a cylindrical exterior middle. Both for its ferrule head to have a good swaging performance and for its ferrule middle to have a good rigidity, the sealing ferrule for the double ferrule design had better have a conical exterior middle whose conical angle is about 7° smaller than its ferrule head wedge angle and whose start and end or whose height correspond to the cylindrical exterior of the swaging ferrule of the single ferrule design.

The sealing ferrule for the double ferrule design has a conical exterior tail whose taper is the same as the taper of the driving interior of the driving nut, which is firstly to be used to receive a direct drive of the driving nut (3), as shown in Fig.16, to preswage the ferrule head for setting its inside diameter to the tubing exterior to unify the wrenching turns for installing the tubing with a diameter variation and secondly to be used to provide a space for the nut (3) to fully drive the holding ferrule (2b) toward the tubing, as shown in Fig.17, to suit the tubing variation in diameters.

As shown in Fig. 17 and Fig.18, the holding ferrule (2b) can only slide on the tubing until the advancing resistance to the sealing ferrule (2a) gets bigger enough or until the ferrule head finishes its sealing and fastening to the tubing; or only when the sealing ferrule cannot be driven forward or only when the ferrule head finishes its sealing and fastening to the tubing, can the nut (3) drive the holding ferrule into the tubing. When the holding ferrule is driven into the tubing more or less, the depression existing on the tubing, no matter how it is shallow, will at once stop the sliding of the holding ferrule on the tubing together with the sealing ferrule. At the moment, if the holding ferrule tried to be driven a little forward, the driven interior of the sealing ferrule, as the guide of the holding ferrule, would guide the holding ferrule more into the tubing and even make the holding ferrule be away from the interior driven by it for a moment and hereafter not drive the sealing ferrule. That is to say, the moment the holding ferrule is driven into the tubing a little is the moment the sealing ferrule can not be driven any forward. Actually, it is imaginable that it is impossible anyhow for the holding ferrule being driven into a "groove" of the tubing to leap out of the "groove", and the reflected feel is surely a feel not to be wrenchable.

Scientifically speaking, once the holding ferrule (2b), as shown in Fig.19, is swaged into the tubing to form an arc depression equivalent to two small wedges on the tubing under the holding ferrule, any driving increment $\Delta F$ from the driving nut (3) to the holding ferrule will bring about a reacting force $\Delta F$ from the tubing to the holding ferrule. The reacting force $\Delta F$, boosted by two progressive wedges, becomes a resistance $F=\Delta F/tg\beta tg\gamma$ to the driving nut, which is over ten times bigger than the driving increment and definitely tells the installer to stop tightening, where $\beta$ and $\gamma$ are the related wedge angles. So do any shocking impulses from the sealing to the holding ferrule, or they are also destined to be boosted and fed back and counteracted so as not to influence the original sealing state. This is what the unique double wedge drive-stopping and shock-resisting structure of the invention does.

Seeing Fig. 17 and Fig.18, it is not difficult to understand that the sealing ferrule being driven is a multiple times power amplifying wedge relative to its axial driving component, and a multiple times power amplifying lever relative to its radial driving component; the wedge angle is $\alpha$, and the lever fulcrum is B. The sealing ferrule, as a lever with a great mechanical advantage, makes its ferrule tail have a greatest rigidity, and so it is almost impossible for the reacting force of the tubing on the ferrule head to make the ferrule tail shrink, or a very small radial force acting on the ferrule tail can prop up the ferrule tail to make the ferrule inner edge E get a cutting back angle and benefit its cutting into the tubing. The swaging force of the sealing ferrule head by its edges D and E is the outputs of the power-amplifying wedge and lever, whereas the swaging force of the holding ferrule by its arc K is only one smaller radial power of the inputs of the power-amplifying wedge and lever; i.e. the input is far smaller than the outputs. Therefore, the sealing ferrule and the holding ferrule, as driven, use at first the ferrule head edge D, then the ferrule inner edge E and at last the arc K to swage the tubing; the arc K of the holding ferrule can not be swaged into the tubing until the ferrule inner edge E is fully swaged into the tubing; when the arc K of the holding ferrule starts to be swaged into the tubing, the ferrule head edge D has surely reached its smooth-swaging connection to the tubing.

Fig.17 shows the finger-tightened state, and Fig. 18 shows the wrench-tightened state. If finishing installation totally needs for wrench to tighten for N turns from finger-tightened position, the ferrule head edge D shall finish its sealing of tubing when wrench tightens for about N/2 turns, which can be checked by pressure testing; if not so when wrench tightens for N/2 turns, the sealing strength of the cantilever should be increased by either increasing the wall thickness at the ferrule head edge or shortening the cantilever, and if there is a visible swaged depression on the tubing after wrench tightens for about N turns, the sealing strength of the cantilever should be decreased by either decreasing the wall thickness at the ferrule head edge or lengthening the cantilever.

It can be seen from the above-mentioned that the swaging ferrule set made up of a sealing ferrule and a holding ferrule of the invention, as driven, swages the tubing at first by its sealing ferrule head edge D to perform the sealing connection and then by its sealing ferrule inner edge E to perform the transitional sealing connection and the fastening connection, and at last grips the tubing by its holding ferrule to perform the final fastening connection and to deliver an operation stopping feel for installation at the same time.

Similar to the ferrule head edge D of the single ferrule design, it is by a sealing cantilever with an adequate strength that the sealing ferrule head edge D of double ferrule design swages the tubing, and so the edge D can only have a tube-swaging ability for smoothing but not for depressing or can only provide a smoothing swage or a smooth-swaged joint for connection no matter how the ferrules are driven. Because the swaging forces of the sealing ferrule head edge D and inner edge E of the double ferrule design are far bigger than the swaging force of the arc K of the holding ferrule, the double ferrules, as driven, can only swage the tubing at first by their sealing ferrule head edge D and their sealing ferrule inner edge E to perform the sealing connection and the primary fastening connection and then by the arc K of the holding ferrule to perform the final fastening connection. When the swaged depression groove on the tubing reaches to a certain depth, it is impossible for the holding ferrule to leap out of the groove to swage the sealing ferrule. Therefore, it can be seen that the double ferrule swaged connection of the invention is completed by two coordinated smooth-swaging and depression-swaging motions with each separate and in succession.

Although the sealing ferrule head edge D of the double ferrule design does its swaging of the tubing by a sealing cantilever similar to the single ferrule design and has the same perfect sealing effectiveness as the ferrule head edge D of the single ferrule design, the sealing connection resulting from the sealing cantilever and the fastening connection resulting from the holding ferrule of the double ferrule design have an enough transition and a full isolation provided by the ferrule inner edge E and become safer and more reliable.

Although both the single ferrule design and the double ferrule design of the invention can both provide an operation stopping feel for installation and tolerate an overdrive, but as for the overdrive isolation, the isolation of the single ferrule design is done by a radial warp of the swaging ferrule middle and what to be shielded is an overdriven motion of the ferrule tail but not an overdriving effort or power on the ferrule tail, whereas what to be shielded by the swaged depression groove of the double ferrule design is the overdriving effort or power. Therefore, the double ferrule design of the invention can tolerate a more overdrive and deliver a more definite installation stopping feel than the single ferrule design of the invention, and the sealing ferrule and the holding ferrule after overdriven have no undesirable deformation and can be removed off and reassembled on the tubing; whereas the swaging ferrule of the single ferrule design can not be removed off the tubing after overdriven, but can safely be reassembled together with the tubing.

So far, it can be seen that the double ferrule design of the invention has better reached the first two predetermined inventing objects than the single ferrule design of the invention.

**Brief Description of the Drawings**

Fig.1 is an illustration of a single ferrule tube fitting of the invention used to connect tubing to a threaded port, where part 1 is the connecting body, part 2 is the swaging ferrule, part 3 is the driving nut, part 4 is the tubing and part 5 is an O-gasket.

Fig.2 is a half section view of the swaging ferrule in Fig. 1.

Fig.3 and Fig.4 are the half section views of two kinds of swaging ferrules of the single ferrule design of the prior art.

Fig.5 is an exploded isometric view of Fig.1 without the O-gasket.

Fig.6 is partial section views of a finger-tightened assembly of a single ferrule tube fitting of the prior art, and Fig.6b is the partially enlarged view of Fig. 6a, where parts 2 and 3 each have its designs of the prior art.

Fig.7 is partial section views of a wrench-tightened final assembly of a single ferrule tube fitting of the prior art, and Fig.7b is the partially enlarged view of Fig.7a, where parts 2 and 3 each have its designs of the prior art.

Fig.8 is partial section views of a finger-tightened assembly of a single ferrule tube fitting of the invention, and Fig.8b is the partially enlarged view of Fig. 8a, where parts 2 and 3 each have its designs in accordance with the invention.

Fig.9 is partial section views of a wrench-tightened final assembly of a single ferrule tube fitting of the invention, and Fig.9b is the partially enlarged view of Fig.9a, where parts 2 and 3 each have its designs in accordance with the invention.

Fig.10 is the further enlarged view of Fig. 8b to show the ferrule head wedge $\alpha$ and the ferrule tail wedge angle $\beta$ of the single ferrule tube fitting of the invention.

Fig.11a is a force analyzing view of the finger-tightened swaging ferrule of a single ferrule tube fitting of the invention, and Fig. 11b shows the forces for the finger-tightened swaging ferrule to react on its driving nut.

Fig. 12a is a force analyzing view of the wrench-tightened swaging ferrule of a single ferrule tube fitting of the invention, and Fig.12b shows the forces for the wrench-tightened swaging ferrule to react on its driving nut.

Fig. 13 is an illustration of a double ferrule tube fitting of the invention used to connect tubing to a threaded port, where part 1 is the connecting body, part 2a is the sealing ferrule, part 2b is the holding ferrule, part 3 is the driving nut, part 4 is the tubing and part 5 is an O-gasket.

Fig. 14 is the half section view of the sealing ferrule in Fig.13, and Fig.15 is an exploded isometric view of Fig.13 without the O-gasket.

Fig. 16 is the partial section view preswaging the sealing ferrule without the holding ferrule of the double ferrule tube fitting of the invention for setting the sealing ferrule head inside diameter to the tubing exterior.

Fig. 17 is the partial section view of a finger-tightened assembly of a double ferrule tube fitting of the invention.

Fig.18 is the partial section view of a wrench-tightened assembly of a double ferrule tube fitting of the invention.

Fig. 19 is the double wedge drive-stopping and shock-resisting structure formed finally by the driven double ferrules of a double ferrule tube fitting of the invention.

**Detailed Description of Embodiments**

Either the single ferrule tube fitting or the double ferrule tube fitting of the invention is a tube fitting for connecting a plain end tube to any other tube-receiving port. To finish this kind of connections, of course, the tube fitting shall have another connecting end port except a ferrule-swaging port for receiving a plain end tube, such as threaded end ports, welding end ports etc. If the tube fitting is to be used to connect tubes together, all its connecting-ports shall be the ferrule-swaging port. The single ferrule tube fitting of the invention shown in Fig. 1 or Fig.5 and the double ferrule tube fitting of the invention shown in Fig.13 or Fig. 15 are both a tube fitting used to connect the tubing to a threaded port.

The single ferrule tube fitting of the invention, as shown in Figs.1 and 5, is made up of a connecting body (1), a swaging ferrule (2) and a driving nut (3). The double ferrule tube fitting of the invention, as shown in Figs.13 and 15, is made up of a connecting body (1), a sealing ferrule (2a), a holding ferrule (2b) and a driving nut (3). In the two embodiments, each has a corresponding similar design or construction except the swaging ferrules, and it is a single ferrule tube fitting when using the swaging ferrule (2) and it is a double ferrule tube fitting when using a sealing ferrule (2a) and a holding ferrule (2b) as the swaging ferrule; i.e. the swaging ferrule made up of a single ferrule can be replaced by the swaging ferrule set made up of a sealing ferrule and a holding ferrule in one tube fitting system; or more definitely speaking, the swaging ferrule and the swaging ferrule set can be replaced by each other in one ISO 8434-1 system which, compared with the original ISO 8434-1, only has a different swaging ferrule and a different driving conical interior of the connecting nut.

As shown in Figs.6 and 7, the driving conical angle of the driving nut of the present ISO 8434-1 is 2x45°, and the corresponding ferrule tail wedge angle or the wedge angle for the ferrule tail to reswage its driving nut is $\beta=90°-45°=45°$. As shown in Figs.8 and 9, the driving conical angle of the driving nut of the invention is 2x60°, and the corresponding ferrule tail wedge angle or the wedge angle for the ferrule tail to reswage its driving nut is $\beta=90°-60°=30°$. Actually, the wedge angle $\beta$ for the ferrule to reswage its driving nut, when smaller than 45°, can function as decrease of the installation torque and as increase of the installation stopping feel whether it is a single ferrule design or a double ferrule design.

The swaging ferrule of the single ferrule design and the sealing ferrule of the double ferrule design of the invention both can be from a redesign of the A type ferrule of DIN 3861:2002. As shown in Figs.2 and 14, **the first,** the swaging ferrule of the single ferrule design has the same ferrule head exterior as the sealing ferrule of the double ferrule design with their conical exterior angle between circles B and C or with their ferrule head wedge angle $\alpha$ equal to 12° similar to the prior art, with their circle B diameter about equal to the tapered mouth biggest diameter of the connecting body, with their axial distance between circles B and D about equal to an half depth of the tapered mouth of the connecting body, with their axial distance between circles C and D about equal to a third the axial distance between circles B and D, and with their wall thickness at edge D about equal to 0.015 times the nominal outside diameter of the tubing; **the second,** the swaging ferrule of the single ferrule design has a ferrule head interior similar to the sealing ferrule of the double ferrule design with their conical frustum interior angle equal to their conical frustum (B-C) exterior angle and with their ferrule inner edge E and their back circle B in the same plane except that the single ferrule design has a ferrule inner edge E of 90° and the double ferrule design has a ferrule inner edge E of 120°; **the third,** the swaging ferrule of the single ferrule design of the invention has two stepped cylindrical exterior with the same diameter and the same height as of the prior art, and the sealing ferrule of the double ferrule design of the invention may have a conical frustum exterior middle with its conical angle equal to 2x5° and with its position and height the same as the position and height of the cylindrical exterior middle of the single ferrule design of the invention, and may have a cylindrical stepped exterior diameter bigger than of the single ferrule design but not bigger than the minor diameter of the female thread of the driving nut; **the fourth,** the swaging ferrule of the single ferrule design of the invention has a drive-receiving arc exterior tail with its chord parallel with the driving interior of the nut and with its arc segment height equal to 0.01 times the nominal outside diameter of the tubing, and with its radial width of the not-driven circular flat H also equal to 0.01 times the nominal outside diameter of the tubing; and the last, the sealing ferrule of the double ferrule design of the invention has an auxiliary conical exterior tail with its height or position and with its conical angle (120°) coordinated with the driving interior of the nut, and has a drive-receiving conical interior with its conical angle equal to 120° and with its magnitude just suitable for the whole driving trip of the holding ferrule. The inside diameter of the holding ferrule is the allowable most outside diameter of the tubing, and the wire section diameter of the holding ferrule is the allowable total diametric shrink of the holding ferrule; i.e. the double ferrule tube fitting of the invention can cope with a big variation in tubing diameters, and so the wire section diameter can be decided according to industrial tube tolerance.

It can remove the sealing function of the ferrule inner edge E and test the sealing function of the ferrule head edge D to cut an axial groove on the tubing under the edge E. According to the test result or the final requirement, it can adjust the sealing or tube-swaging strength of the ferrule head edge D to change the wall thickness at the ferrule head edge D or to change the length of the sealing cantilever C-D. It can adjust the connection rigidity, the biggest installation torque etc. to change the diameter of the circle B at the ferrule head and the diameter of the stepped cylindrical exterior at the ferrule tail. It can adjust the installation torque and the switch time from sealing action to fastening action or can advance or delay the fastening action to change the drive-receiving interior conical angle at the sealing ferrule tail port of the double ferrule design.

The sealing ferrule (corresponding to the front ferrule of the prior art) of the double ferrule design of the invention, at its tail port, has a drive-receiving conical interior with a conical angle (120°) bigger than 90° of the prior art, and at its head, has a driving conical exterior with a conical angle (2x12°) (equal to the body interior conical angle) smaller than 40° of the prior art. The smaller body interior conical angle (2x12°) makes the ferrule head wedge have a bigger axial effort amplifying ability, and the bigger ferrule interior conical angle (120°) makes the sealing ferrule (front ferrule) have a bigger axial effort and a smaller radial effort. The bigger axial effort, after amplified by the ferrule head wedge with the bigger axial effort amplifying ability, will become a much greater tube-swaging force and can effectively decrease the installation torque for useful ferrule head deformation; furthermore the smaller radial effort can effectively decrease the installation torque for useless ferrule tail deformation; therefore the double ferrule design of the invention break the technical bottleneck of the present Swagelok double ferrule design whose the installation torque is too big to use a slightly hard ferrule, such as the case-hardened ferrule, required for high pressure service.

The above-assigned design parameters are only for an embodiment of the invention. The performance of the tube swage connection or a tube fitting is decided by many design parameters, and it is possible to embody the invention by change partial parameters or the whole parameters. That is to say, there are many different embodiments for the invention, or in another word, the single swaging ferrule and the double swaging ferrule set of the invention can be replaced by each other in one non-ISO 8434-1 tube fitting system.

**Claims**

1. A single ferrule tube fitting made up of a connecting body, a swaging ferrule and a driving nut; the connecting body, on its outside, having a male thread engaged with the driving nut, and on its inside, in turn having a through hole, a stepped hole and a tapered mouth; the through hole having a diameter about equal to the inside diameter of the tubing, the stepped hole having a diameter slightly bigger than the outside diameter of the tubing, the tapered mouth being used to accommodate the swaging ferrule, the tubing through the driving nut and the swaging ferrule being inserted in the stepped hole against or not against its bottom, and the driving nut, by its thread engagement with the connecting body, driving the swaging ferrule between the connecting body and the tubing to finish the sealing and the fastening of the swaging ferrule to the tubing and the connecting body; wherein the said swaging ferrule is a ferrule with a sealing cantilever by whose swaging of the said tubing to reach the tube-swaging seal, and the said cantilever is supported on or is against the said tapered mouth interior of the said connecting body.

2. A single ferrule tube fitting made up of a connecting body, a swaging ferrule and a driving nut; the connecting body, on its outside, having a male thread engaged with the driving nut, and on its inside, in turn having a through hole, a stepped hole and a tapered mouth; the through hole having a diameter about equal to the inside diameter of the tubing, the stepped hole having a diameter slightly bigger than the outside diameter of the tubing, the tapered mouth being used to accommodate the swaging ferrule, the tubing through the driving nut and the swaging ferrule being inserted in the stepped hole against or not against its bottom, and the driving nut, by its thread engagement with the connecting body, driving the swaging ferrule between the connecting body and the tubing to finish the sealing and the fastening of the swaging ferrule to the tubing and the connecting body; wherein the ferrule tail wedge angle $\beta$ of the said swaging ferrule is smaller than 45°, the said swaging ferrule has at its tail port a circular flat free of contact with the driving interior of the said driving nut, the said driving nut starts driving the said swaging ferrule tail by a point contact in the longitudinal section, and the radial component beam acting on the said point contact is within the said swaging ferrule.

3. A single ferrule tube fitting in accordance with either claim 1 or claim 2, wherein the ferrule head wedge angle $\alpha$ of the said swaging ferrule is equal to 12°, and the ferrule tail wedge angle $\beta$ of the said swaging ferrule is neither smaller than 15° nor bigger than 30°, i.e. $15° \leq \beta \leq 30°$.

4. A single ferrule tube fitting in accordance with claim 2, wherein the said point contact is provided by a driving engagement between the driving conical interior of the said driving nut and the arc exterior of the said swaging ferrule tail.

5. A double ferrule tube fitting made up of a connecting body, a sealing ferrule, a holding ferrule and a driving nut; the connecting body, on its outside, having a male thread engaged with the driving nut, and on its inside, in turn having a through hole, a stepped hole and a tapered mouth; the through hole having a diameter about equal to the inside diameter of the tubing, the stepped hole having a diameter slightly bigger than the outside diameter of the tubing, the tapered mouth being used to accommodate the sealing ferrule, the tubing through the driving nut, the holding ferrule and the sealing ferrule being inserted in the stepped hole against or not against its bottom, and the driving nut, by its thread engagement with the connecting body, driving the sealing ferrule and the holding ferrule between the connecting body and the tubing to finish the sealing and the fastening of the double swaging ferrule set to the tubing and the connecting body; wherein the said sealing ferrule is a ferrule with a sealing cantilever by whose swaging of the said tubing to reach the tube-swaging seal, and the said cantilever is supported on or is against the said tapered mouth interior of the said connecting body.

**6.** A double ferrule tube fitting in accordance with claim 5, wherein the said holding ferrule is a turn of split steel wires with a round section.

**7.** A double ferrule tube fitting in accordance with claim 5, wherein the said holding ferrule is a turn of split steel wires with a non-round section, and the tube-swaging segment of the said non-round section is an arc and the driving and the being driven segments of the said non-round section are a segment of straight lines or curves other than arc.

**8.** A double ferrule tube fitting in accordance with claim 5 or claim 6 or claim 7, wherein the ferrule head wedge angle $\alpha$ of the said sealing ferrule is equal to 12°, and the wedge angle $\beta$ for the said holding ferrule to reswage the said driving nut is neither smaller than 15° nor bigger than 30°, i.e. $15° \leq \beta \leq 30°$.

**9.** A tube fitting in accordance with claim 1 or claim 5, wherein both the said swaging ferrule for the single ferrule tube fitting and the said sealing ferrule for the double ferrule tube fitting have their inner edge circle E and their outer intersection circle B of the ferrule head and the ferrule middle in the same plane just to make the said intersection circle B be the cutter back circle of the said edge circle E.

**10.** A tube fitting made up of connecting bodies, swaging ferrules and driving nuts; the connecting body, on its outside, having a male thread engaged with the driving nut, and on its inside, in turn having a through hole, a stepped hole and a tapered mouth; the through hole having a diameter about equal to the inside diameter of the tubing, the stepped hole having a diameter slightly bigger than the outside diameter of the tubing, the tapered mouth being used to accommodate the swaging ferrule, the tubing through the driving nut and the swaging ferrule being inserted in the stepped hole against or not against its bottom, and the driving nut, by its thread engagement with the connecting body, driving the swaging ferrule between the connecting body and the tubing to finish the sealing and the fastening of the swaging ferrule to the tubing and the connecting body, where the swaging ferrule is a single ferrule or a double ferrule set made up of a sealing ferrule and a fastening or holding ferrule; wherein the mechanical strength of the said driving nut shall be higher than the connecting body.

## Accompanying Drawings

Fig. 1

Fig. 2

Fig.3 Prior Art

Fig.4 Prior Art

Fig. 5

14

Fig.6a Prior Art

Fig.6b Prior Art

Fig.7a Prior Art

Fig.7b Prior Art

Fig. 8a

Fig. 8b

Fig. 9a

Fig. 9b

Fig. 10

Fig. 11a

Fig. 11b

Fig. 12a

Fig. 12b

Fig. 13

Fig. 14

Fig. 15

Fig. 16

Fig. 17

Fig. 18

Fig. 19

$$F = \frac{\Delta F}{tg\beta \, tg\gamma}$$

# INTERNATIONAL SEARCH REPORT

| | International application No. |
|---|---|
| | PCT/CN2007/003486 |

**A. CLASSIFICATION OF SUBJECT MATTER**

F16L19/08 (2006.01) i

According to International Patent Classification (IPC) or to both national classification and IPC

**B. FIELDS SEARCHED**

Minimum documentation searched (classification system followed by classification symbols)

IPC: F16L19/08,19/10, 19/12, 19/14, 19/00

Documentation searched other than minimum documentation to the extent that such documents are included in the fields searched

Electronic data base consulted during the international search (name of data base and, where practicable, search terms used)

EPODOC,WPI,PAJ,CNPAT,CNKI: grip w ring , clamping w ring , ferrule

**C. DOCUMENTS CONSIDERED TO BE RELEVANT**

| Category* | Citation of document, with indication, where appropriate, of the relevant passages | Relevant to claim No. |
|---|---|---|
| A | WO2006088668A1 (SWAGELOK CO et al) 24 Aug. 2006 (24.08.2006) the whole document | 1-4,9,10 |
| A | CN1826490A (IHRA SCIENCE CORP et al) 30 Aug. 2006(30. 08.2006) the whole document | 1-4,9,10 |
| A | WO2005043023A1 (SWAGLOK Co et al) 12 May. 2005 (12.05.2005) the whole document | 5-10 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 25 Jan. 2008 （25.01.2008） | **03 Apr. 2008 (03.04.2008)** |

| Name and mailing address of the ISA/CN | Authorized officer |
|---|---|
| The State Intellectual Property Office, the P.R.China<br>6 Xitucheng Rd., Jimen Bridge, Haidian District, Beijing, China<br>100088<br>Facsimile No. 86-10-62019451 | WANG, Rui<br>Telephone No. (86-10)62085443 |

Form PCT/ISA/210 (second sheet) (April 2007)

<table>
<tr><td colspan="2" align="center">**INTERNATIONAL SEARCH REPORT**<br>Information on patent family members</td><td colspan="2">International application No.<br><br>PCT/CN2007/003486</td></tr>
<tr><td align="center">Patent Documents referred<br>in the Report</td><td align="center">Publication Date</td><td align="center">Patent Family</td><td align="center">Publication Date</td></tr>
<tr><td align="center">WO2006088668A1</td><td align="center">24.08.2006</td><td align="center">CA2596978A</td><td align="center">24.08.2006</td></tr>
<tr><td></td><td></td><td align="center">EP1848911A1</td><td align="center">31.10.2007</td></tr>
<tr><td></td><td></td><td align="center">EP20060734327A</td><td align="center">06.02.2006</td></tr>
<tr><td></td><td></td><td align="center">KR20070106556A</td><td align="center">01.11.2007</td></tr>
<tr><td align="center">CN1826490A</td><td align="center">30.08.2006</td><td align="center">WO2005008119A</td><td align="center">27.01.2005</td></tr>
<tr><td></td><td></td><td align="center">JP2005036946A</td><td align="center">10.02.2005</td></tr>
<tr><td></td><td></td><td align="center">KR20060029627A</td><td align="center">06.04.2006</td></tr>
<tr><td></td><td></td><td align="center">EP1647752A1</td><td align="center">19.04.2006</td></tr>
<tr><td></td><td></td><td align="center">US2007170723A1</td><td align="center">26.07.2007</td></tr>
<tr><td align="center">WO2005043023A1</td><td align="center">12.05.2005</td><td align="center">CA2543573A</td><td align="center">12.05.2005</td></tr>
<tr><td></td><td></td><td align="center">AU2004286345A1</td><td align="center">12.05.2005</td></tr>
<tr><td></td><td></td><td align="center">EP1682804A1</td><td align="center">26.07.2006</td></tr>
<tr><td></td><td></td><td align="center">EP20040800692A</td><td align="center">03.11.2004</td></tr>
<tr><td></td><td></td><td align="center">NO20062577A</td><td align="center">02.08.2006</td></tr>
<tr><td></td><td></td><td align="center">KR20060125784A</td><td align="center">06.12.2006</td></tr>
<tr><td></td><td></td><td align="center">CN1902425A</td><td align="center">24.01.2007</td></tr>
<tr><td></td><td></td><td align="center">JP2007510871T</td><td align="center">26.04.2007</td></tr>
<tr><td></td><td></td><td align="center">US2008007050A</td><td align="center">10.01.2008</td></tr>
<tr><td></td><td></td><td align="center">US2008012301A</td><td align="center">17.01.2008</td></tr>
</table>

Form PCT/ISA/210 (patent family annex) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 02128376
- GB 3733 A
- GB 3765 A
- US 2139413 A, German Kreidel
- US 1932 A
- US 2414995 A
- US 1940 S
- US 5351998 A
- US 1990 A
- US 2484815 A, American Crawford
- US 1947 A
- US 20040066040 A
- US 20060049632 A
- US 20060012169 A
- US 2002 A
- US 650330 A, Kurtz's
- US 1899 A
- DE 4041677
- DE 4103266
- DE 4426445
- US 6073976 A
- US 3075793 A
- US 3103373 A
- US 5882050 A
- US 6131963 A
- US 6629708 B